(19) **Europäisches Patentamt / European Patent Office / Office européen des brevets**

(11) **EP 4 322 752 B1**

(12) **EUROPEAN PATENT SPECIFICATION**

(45) Date of publication and mention
of the grant of the patent:
**13.11.2024 Bulletin 2024/46**

(21) Application number: **22721739.5**

(22) Date of filing: **08.04.2022**

(51) International Patent Classification (IPC):
**A23B 4/03** $^{(2006.01)}$   **A23L 3/40** $^{(2006.01)}$
**B28B 13/06** $^{(2006.01)}$   **D21F 5/00** $^{(2006.01)}$
**F26B 3/28** $^{(2006.01)}$   **F26B 21/08** $^{(2006.01)}$
**G05D 22/00** $^{(2006.01)}$   **F26B 25/22** $^{(2006.01)}$

(52) Cooperative Patent Classification (CPC):
**F26B 25/22; A23B 4/03; A23B 4/031; A23L 3/40;**
**F26B 21/08;** D21F 5/00

(86) International application number:
**PCT/EP2022/059449**

(87) International publication number:
**WO 2022/218861 (20.10.2022 Gazette 2022/42)**

(54) **METHODS FOR THE ESTIMATION OF SURFACE WATER ACTIVITY IN PRODUCTS BEING DRIED**

VERFAHREN ZUR SCHÄTZUNG DER OBERFLÄCHENWASSERAKTIVITÄT IN TROCKNUNGSPRODUKTEN

PROCÉDÉS D'ESTIMATION DE L'ACTIVITÉ DE L'EAU DE SURFACE DANS DES PRODUITS EN COURS DE SÉCHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2021 CN 202110404907**

(43) Date of publication of application:
**21.02.2024 Bulletin 2024/08**

(73) Proprietor: **Viscofan Technology (Suzhou) Co., Ltd.**
**Suzhou, Jiangsu 215121 (CN)**

(72) Inventors:
- **NEGRI SAMPER, Juan**
  **Suzhou, Jiangsu 215121 (CN)**
- **LONGO, Carlos Maria**
  **Suzhou, Jiangsu 215121 (CN)**

(74) Representative: **Herrero & Asociados, S.L.**
**Edificio Aqua - Agustín de Foxá, 4-10**
**28036 Madrid (ES)**

(56) References cited:
**EP-A1- 2 959 247**   **EP-B1- 2 959 247**
**WO-A1-2014/129957**   **JP-A- 2020 153 774**

- **GINER ET AL: "Sorptional Parameters of Sunflower Seeds of Use in Drying and Storage Stability Studies", BIOSYSTEMS ENGINEERING, ELSEVIER, AMSTERDAM, NL, vol. 92, no. 2, 1 October 2005 (2005-10-01), pages 217 - 227, XP005074634, ISSN: 1537-5110, DOI: 10.1016/J.BIOSYSTEMSENG.2005.06.002**
- **LEBERT I ET AL: "Assessment of bacterial growth on the surface of meat under common processing conditions by combining biological and physical models", JOURNAL OF FOOD ENGINEERING, ELSEVIER, AMSTERDAM, NL, vol. 68, no. 1, 1 May 2005 (2005-05-01), pages 89 - 98, XP027609741, ISSN: 0260-8774, [retrieved on 20050501]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Object of the invention**

The object of the present invention relates to methods for estimating surface water activity in products being dried and drying facilities that implement said methods.

**Background of the invention**

Air drying is used in many products. For example, in foods, such as cheeses, and particularly in sausages, especially in cured sausages. For example, sausages such as salamis are subjected to long, highly controlled drying processes in drying chambers, until the desired degree of curing is achieved. It is essential to control the ripening and drying process in these chambers, to finally obtain sausages with optimal characteristics.

For the preparation of salami, for example, the meat mixture is first prepared with the desired additives, and it is stuffed, for example, into high-caliber casings. The meat product originally has a high water activity ($aw$), which must be gradually and continuously lowered until obtaining a low $aw$ meat product that is already preserved and is microbiologically stable. The drying process must be carried out according to a very careful protocol of time, temperature ($T$) and relative humidity ($HR\%$) of the chambers to guarantee a gradual drying of the product, since if it is not well controlled, the defect called "crusting" can occur. Indeed, the aim is that drying is as fast as commercially possible, for example, weeks or months, but that this speed of drying does not lead to the surface of the sausage drying out too much, preventing the core of the sausage from drying out gradually as well.

For a body in contact with a certain atmosphere to be able to dry out, it is necessary that the $aw$ of said body (for example, $aw \approx 0.56$) is greater than $HR\%$ of the atmosphere in contact, for example 50%HR or put in equivalent form of so much by one to compare with $aw \approx 0.50$. In this case there will be a desiccation of the body by the atmosphere, until in equilibrium $a_w$ is identical on both sides. For example, if said body has very little mass and is placed with an unlimited reserve of atmospheric air with a $HR\%$ of 50% (equivalent to a $aw \approx 0.50$), finally the body will dry out to $aw \approx 0.50$, to put itself in equilibrium with said atmosphere 50% $HR$. That would be the case with a fine body of constant $aw$.

However, in a body on drying such as a thick sausage such as salami, in which the drying process can take for example 28 days, there may be a whole gradient of $aw$ values inside it, from $aw$ of the core of the Salami (which will initially be very similar to the initial $aw$ of the sausage meat product) to that $aw$ of the surface ($aws$) of the salami (which will tend to be in equilibrium with the $aw$ of the atmosphere with which it is in contact). This gradient is dynamic, depending on the drying of the surface layers with their lowering of $aw$, it pushes the drying of the internal adjacent layers, causing a net movement towards the outside and therefore a net drying. The profile of $aw$ inside the sausage changes during drying and depends on the history of the drying process that has been carried out, it is therefore not static and follows a gradual and dynamic process.

The driving force of the drying process is the existing gradient of $aw$ between the $aw$ of the atmosphere and the $aw$ of the sausage, so that when said gradient is 0, that is:

$$aw \text{ of atmosphere} \approx aw \text{ of sausage}$$

both components (atmosphere and sausage) will be in equilibrium and there will not be a net flow of matter between them. While if:

$$aw \text{ of atmosphere} << aw \text{ of sausage,}$$

There will be a strong drying of the sausage towards the atmosphere, much greater the greater the net difference between both $aw$ in contact. In this process, the $aw$ of the sausage that is relevant to this effect is the $aw$ of the surface of the sausage ($aws$), since it is this area that is in contact with the atmosphere. While the $aw$ inside of the sausage (for example, the core of the sausage) does not interact directly with the $aw$ outside atmosphere, only indirectly and slowly by diffusion through all the internal layers of the sausage.

Therefore, to follow the drying process of products such as sausage, it is important to control the following terms:

- $aw$ of the atmosphere in contact with the surface of the sausage.
- $aw$ of the surface of the sausage ($aws$).

In the classic manufacture of sausages, the sausage drying process was controlled in an artisanal way by the sausage manufacturer, who constantly monitored the apparent degree of dryness of the sausage and the desiccant atmosphere, and acted, for example, by opening and closing the windows of the drying chamber to speed up or slow down the drying process, all in an empirical and traditional way.

Already in modern times, this process has begun to be controlled much more rigorously with technical means.

For example, the first term (*aw* of atmosphere), can be measured continuously by means of probes of *HR%*, for example, sensors inside the drying chambers, they measure the *HR%* and the temperature (*T*) of the air and record it throughout the process.

However, for the second term, the measurement of the sausage *aws* is not as simple as in the previous case. Indeed, while thermo-hygrometric probes continuously record in an easy way the *T* and *HR%* of an air sample, said probes shall, for example, come into contact with the surface of the sausage in order, after an equilibrium process, to provide the equilibrium *HR%* of the air chamber between probe and product. Then the probe must be removed, since it is interfering in the drying process of the sausage surface itself, before taking another measurement. This makes the sausage *aws* measurement complex and difficult to carry out, especially continuously.

JP2020153774 A discloses a method for calculating the water activity of food, wherein the distance between two pairs of humidity sensors and temperature sensors was used for the calculations.

Thus, in order to follow the drying process it is desired to obtain a simple and quick method of estimating the *aws* of the product being dried. The present invention satisfies this demand.

## Description of the invention

**The advantages of the invention are:**

- The *aws* of the product being dried can be estimated with a conventional *HR%* probe of the drying oven, not being necessary an expensive surface probe for the sausage.
- The process is simple and takes little time, so it can be used to control the drying process of products, especially food, and especially sausages, especially cured sausages.
- In the process of the invention, complicated measurements of the meat product are not used, for example, such as the measurement of the surface temperature by infrared probes, or the measurement of the *aws* by surface hygrometric probes, or of the heat flow, but rather advantageously, the usual instruments of dryers, such as the interior temperature and *HR%* probes of the dryer atmosphere, to indirectly estimate parameters corresponding to the product, such as the *aws* of the product and the evaporation rate (*TE*), which can help to monitor and control an adequate drying and maturation process of, for example, salamis.

Thus, in a first aspect, the present invention relates to a method for estimating the surface water activity *aws* of a food product being dried in a dryer comprising at least one relative humidity HR probe of the dryer atmosphere, the process comprises the following steps carried out by computational means:

obtaining by means of the at least one relative humidity *HR* probe a plurality of relative humidity *HRi* humidity values of the dryer atmosphere at time points *ti* during the product drying process and obtaining a set of representative relative humidity *HRri* values based on the relative humidity *HRi* values during the drying process of the product.

The method further comprises obtaining a set of evaporation rate values *TEᵢ* based on the set of *HRᵢ* (%) and/or *Habsᵢ* and *ti* values.

The method also includes obtaining the regression line of the function $F(\alpha, \beta) = F(HRri, TE_i)$, such that

$$\alpha = HReq, \beta = 0$$

$$\beta = TEmáx, \alpha = 0$$

In a preferred embodiment, the variable $\alpha$ is represented on the X coordinate axis, and the variable $\beta$ is represented on the Y coordinate axis, such that:

$F(X, Y) = F(HRri, TE_i)$, wherein:

$$X = HReq, Y = 0$$

$$Y = TEmáx, X = 0$$

wherein *HReq* is the relative humidity when the air and the surface of the product being dried are in equilibrium and wherein *TEmáx* is the maximum evaporation rate when the *HR* of the air in the dryer is zero, and

The method finally includes estimating the *aws* value of the product being dried based on *HReq,* such that:

$$aws = \frac{HReq}{100}$$

In a second aspect, the present invention relates to to a method as defined in appended claim 2. In a third aspect, the present invention relates to a dryer for estimating the surface water activity *aws* of food products being dried, wherein the dryer comprises at least one relative humidity probe *HR*% of the dryer atmosphere and a temperature probe, and computational means configured to obtain by means of the probes a plurality of relative *HRi* and/or absolute *Habs* humidity values of the dryer atmosphere at time points during the product drying process.

In addition, the computational means are configured to obtain a set of representative values of the relative humidity $HR_{ri}$(%).

Furthermore, the computational means are configured to obtain a set of evaporation rate values $TE_i$ based on the set of *HRi* and/or *Habs* and *ti* values.

In addition, the computational means are configured to obtain the regression line of the function $F(\alpha, \beta) = F(HRri, TE_i)$, such that:

$$\alpha = HReq, \beta = 0$$

$$\beta = TEmáx, \alpha = 0$$

In a preferred embodiment, the variable $\alpha$ is represented on the X coordinate axis, and the variable $\beta$ is represented on the Y coordinate axis, such that:

*F(X, Y) = F(HRri, TE_i)*, wherein:

$$X = HReq, Y = 0$$

$$Y = TEmáx, X = 0$$

Wherein *HReq* is the relative humidity when the air and the surface of the product being dried are in equilibrium, wherein *TEmáx* is the maximum evaporation rate if the *HR* of the air in the dryer is zero, and

In addition, the computational means are configured to obtain the *aws* value of the product being dried based on *HReq,* such that:

$$aws = \frac{HReq}{100}$$

In a preferred embodiment, the set of representative relative humidity values $HR_{ri}$(%) corresponds to:

$$HR_{ri}(\%) = (HR_i + HR_{i+1})/2$$

In a preferred embodiment, the set of representative relative humidity values $HR_{ri}$(%) corresponds to:

$$HR_{ri}(\%) = HR_i; \text{ o}$$

$$HR_{ri}(\%) = HR_{i+1}$$

In a preferred embodiment, the set of representative relative humidity values $HR_{ri}$(%) corresponds to:

$$HR_{ri}(\%) = Me\ (HR_i + HR_{i+1} \dots HR_{i+N});$$

wherein *Me* e is the arithmetic mean; and
wherein N is an integer, for example, N = 100.

In a preferred embodiment, the set of evaporation rate values *TE* corresponds to:

-

$$TE_i = (HR_{i+1} - HR_i)/(t_{i+1} - t_i); \text{ o}$$

- $TE_i$ = ($Habs_{i+1}$ - $Habs_i$)/($t_{i+1}$ - $t_i$). In a forth aspect, the present invention relates to a dryer as defined in appended claim 8.

## Other variants of the invention:

Although the invention especially describes applications in the field of maturing meat products, for example salamis, the method described is also applicable to controlling the drying of products in general, such as dried food, powders, wood, paper, etc. etc.
Although long drying time applications are described in the invention, for example weeks, the described method is also applicable to controlling the drying in much shorter periods, for example hours or minutes, just adjusting measurement ranges accordingly.
Although the invention describes in detail drying applications with loss of product weight, it can also be applied for the opposite process, that is, weight gain, or even both, that is, processes that undergo drying phases and other phases otherwise. Preferably, the process according to the present invention can be used in selected intervals having comparable conditions (for example of air flow) and with closed systems that are not carrying out a mass exchange with the outside, for example, by exit or inlet of external air to the dryer or condensation. If not, the results may be less accurate.

## Description of the drawings

To complement the description that is being made and in order to help a better understanding of the features of the estimation method, according to a preferred example of practical implementation thereof, a set of drawings is attached as an integral part of said description wherein, for illustrative and non-limiting purposes, the following has been represented:

Figure 1 shows a period of the evolution of temperature, relative humidity and air speed at the lower edge of the dryer during the drying process.

Figures 2 to 4 show a graphical representation of the data obtained from a first range of values of the period of Figure 1.

Figures 5 to 7 show a graphical representation of the data obtained from a second interval of values of the period of Figure 1.

Figure 8 shows a 3D graph of a set of regression lines obtained with the method according to the present invention.

**Preferred embodiment of the invention**

**EXAMPLE 1**

**Measurement phase:**

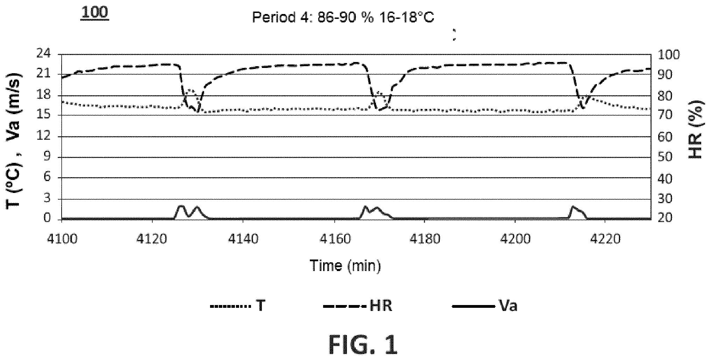

Figure 1 shows a graph (100) of the evolution of temperature, relative humidity, air speed at the lower edge of the dryer in each period of the drying process of a meat product. In particular, Figure 1 corresponds to "Period 4: 86-90% 16-18 °C" of the drying process.

For an example, the data interval between Times: 4132-4162.5 minutes shown in graph (100) of figure 1 is selected, and the following detailed points are selected in Table 1. The time data in minutes are converted into time in hours.

**Table 1:**

| Point N° | Situation | t (hours) | T (°C) | RH (%) | Vair (m/s) |
|---|---|---|---|---|---|
| 1 | 1 | 68.87 | 15.64 | 82.08 | 0.075 |
| 2 | 2 | 68.89 | 15.74 | 85.35 | 0.075 |
| 3 | 3 | 68.97 | 15.81 | 90.10 | 0.077 |
| 4 | 4 | 69.03 | 15.94 | 92.19 | 0.079 |
| 5 | 5 | 69.08 | 15.94 | 93.15 | 0.081 |
| 6 | 6 | 69.21 | 16.00 | 92.82 | 0.084 |
| 7 | 7 | 69.37 | 15.83 | 93.98 | 0.089 |

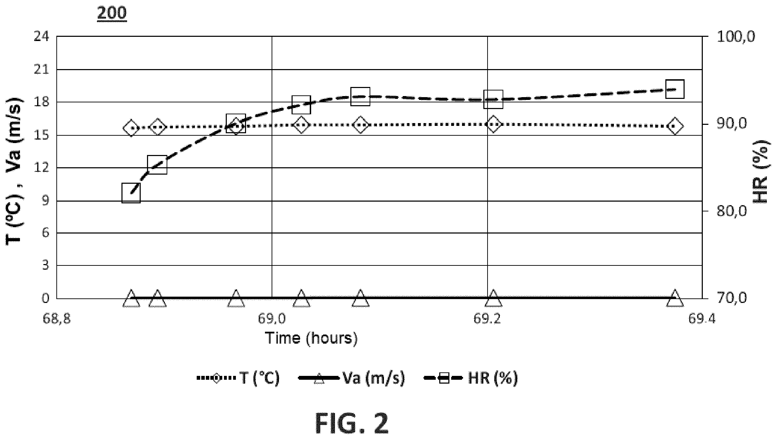

The data in table 1 are represented in graph (200) of figure 2.

**Calculation phase:**

From the data in Table 1, the consecutive intervals between one measurement point and the next one are selected. Interval 1 corresponds to points 1 and 2, (between time t1 and time t2), Interval 2 corresponds to points 2 and 3, and so on.

As *HRr* representative of each interval, the average of *HR* of each point and the next one is selected. For example, in the case of Interval 1:

$$HRr = (HR1 + HR2)/2$$

In other embodiments, *HRr* may be another representative relative humidity value, rather than the average, for example:

$$HRr = HR1;$$

or

$$HRr = HR2;$$

or

The arithmetic mean *Me* of a set of values of *HR*.

As *TE* representative of each interval, the quotient value, of the differences between *HR* and *t* of one point and the next one, is selected in this example. For example, in the case of Interval 1,

$$TE1 = (HR2 - HR1)/(t2 - t1)$$

Data in Table 2 are thus obtained:

Table 2:

| Interval | Between points | HRr (%) | $TE\left(\dfrac{HR}{hour}\right)$ |
|---|---|---|---|
| 1 | 1-2 | 83.71 | 134.40 |
| 2 | 2-3 | 87.72 | 64.94 |
| 3 | 3-4 | 91.14 | 34.41 |
| 4 | 4-5 | 92.67 | 17.48 |
| 5 | 5-6 | 92.98 | -2.70 |
| 6 | 6-7 | 93.40 | 6.90 |

**Representation and Estimation Phase:**

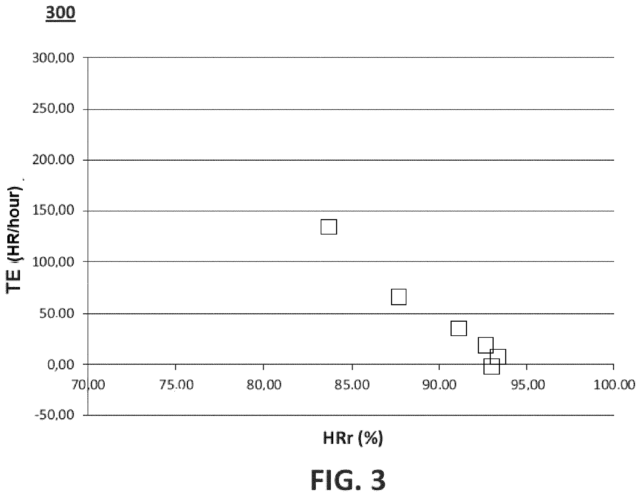

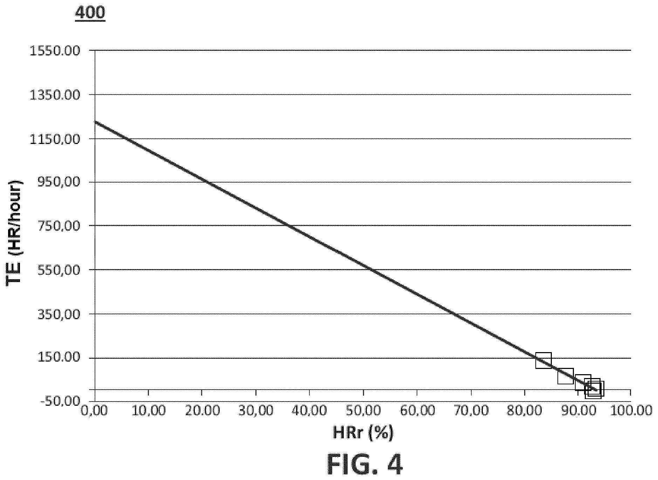

In figure 3 the data in Table 2 is represented in a graph (300), x-y graph, wherein *HRr* is represented as *x* variable, and *TE* as *y* variable. In the graph (400) of figure 4 the regression line of said data from Table 2 has also been added.

By extrapolation of said regression line until cutting the X and Y axes, the following points are obtained:

- Cut with the X Axis: the *HReq* value is obtained from x-y coordinates:

$$X = HReq = 93,4\%, Y = 0$$

- Cut with the Y Axis: the *TEmax* value is obtained from x-y coordinates:

$$X = 0, Y = TEmax = 1228,1$$

**Parameter estimates:**

The *aws* estimated value of the surface of the product being dried, corresponds to the *HReq* value of the air obtained in the previous step, expressed on a per unit basis:

$$HReq = 93.4\% \quad aws = \frac{93.4}{100} = 0.934$$

Interpretation: In this case, it has been determined that the *aws* of the product being dried has an approximate value of 0.934, since *TE* would decrease to zero when the *HR* of the air in the dryer was at 93.4%, and both components: air and surface of the product being dried, would be in equilibrium without a net evaporation of one to another of the components. At this point of equilibrium, both values *aws* and *HReq* would coincide, one of them corresponding to the surface of the sausage, and the other to the air of the dryer. Thus, with the method according to the present invention, the *aws* of the product being dried has been estimated, indirectly without measuring it directly, through the air parameters of the dryer.

The value of the *TE* at each point of *HRr,* can be obtained by extrapolation on the regression line obtained.

The estimated value of the maximum *TE* corresponds to the *TEmáx* value obtained in the graph (300):

$$TEmax = 1228.1$$

In this case the units of *TEmáx* correspond to $\frac{HR}{hour}$ .

Interpretation: *TEmáx* corresponds to the *TE* that would be achieved if the *HR%* of the air of the dryer were set to *HR* = 0%. In this case, *TE* would be the maximum that can be achieved (with the rest of the conditions unchanged) if completely dry air (*HR* = 0%) were used in the dryer. An abnormally low value of *TEmáx,* could indicate that the surface of the product being dried is very dry, and that even if the air in the dryer were set to *HR* = 0%, the rate of evaporation of the product being dried would be greatly reduced, and it would only be capable of increasing HR of the air of the dryer very slowly (very low *TE*).

## EXAMPLE 2

### Measurement Phase:

The data interval between the times: 4173.5-4211.5 minutes of the "Period 4: 86-90% 16-18°C" shown in the graph (100) of figure 1 is selected and the following detailed points are selected in Table 3. The data for *t* (minutes) are converted into *t* in hours.

**Table 3:**

| Point N° | Situation | t (hours) | T (°C) | HR (%) | Vair (m/s) | Habs (g/m3) |
|----------|-----------|-----------|--------|--------|------------|-------------|
| **1** | 1 | 69.56 | 15.66 | 81.70 | 0 | 11.47 |
| **2** | 2 | 69.60 | 15.82 | 88.43 | 0 | 12.54 |
| **3** | 3 | 69.61 | 15.84 | 90.71 | 0 | 12.88 |
| **4** | 4 | 69.62 | 15.79 | 91.17 | 0 | 12.90 |
| **5** | 5 | 69.64 | 15.68 | 92.92 | 0 | 13.05 |
| **6** | 6 | 69.70 | 15.89 | 92.93 | 0 | 13.24 |
| **7** | 7 | 70.19 | 15.76 | 95.23 | 0.05 | 13.45 |

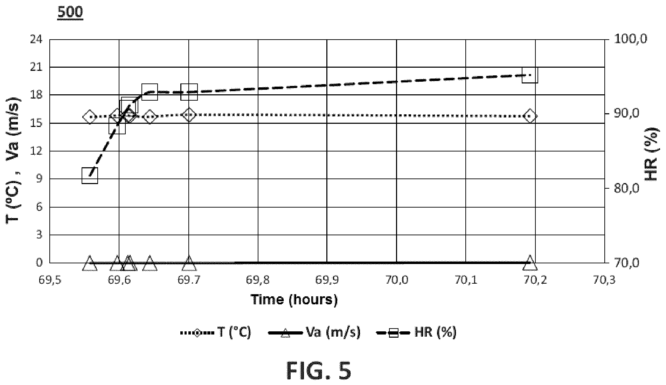

Figure 5 shows a graph (500) with the values of Table 3..

### Calculation Phase:

From the data in Table 3, the consecutive intervals between one point and the next one are selected. Interval 1 corresponds to points 1 and 2, (between time t1 and time t2), Interval 2 corresponds to points 2 and 3, and so on.

As *HRr* representative of each interval, the average of *HR* of each point and the next one is selected. For example, in the case of Interval 1,

$$HRr = (HR1 + HR2)/2$$

In this example 2 additional data is considered, demonstrating the versatility of the method of the invention.

From the *HR* and *T*(ºC) values, *Habs* (*g/m3*) of the air is calculated, by means of the usual psychrometric equations. These values are included as an additional column in Table 3.

As *TE* representative of each Interval, the value of the quotient is selected in this example 2, of the differences between *Habs* and *t* of one point and the next one. For example, in the case of Interval 1,

$$TE = (Habs2 - Habs1)/(t2 - t1).$$

Data in Table 4 are thus obtained:

**Table 4:**

| Interval | Between points | HRr (%) | TE (g/m3/h) |
|---|---|---|---|
| 1 | 1-2 | 85.06 | 27.04 |
| 2 | 2-3 | 89.57 | 22.27 |
| 3 | 3-4 | 90.94 | 9.06 |
| 4 | 4-5 | 92.05 | 5.17 |
| 5 | 5-6 | 92.92 | 3.27 |
| 6 | 6-7 | 94.08 | 0.42 |

**Representation and Estimation Phase:**

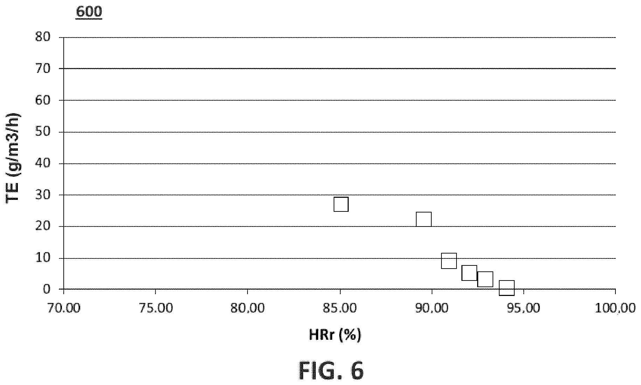

In a graph (600) of figure 6, x-y graph, the data of Table 4 are represented:

*HRr* as variable *x*;
*TE* as variable *y*;

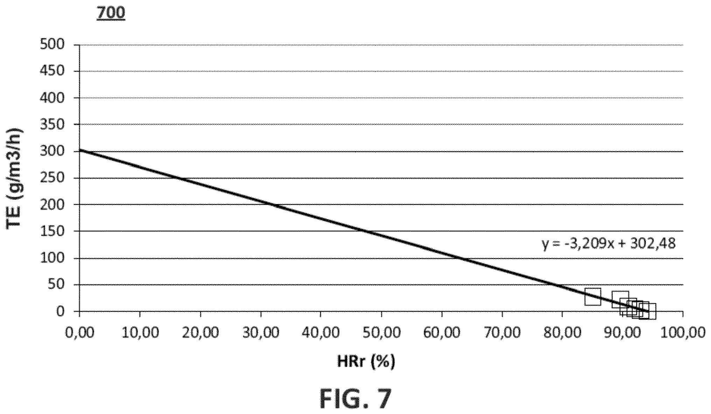

In e graph (700) of figure 7 the regression line of said data has also been added.
By extrapolation of said regression line until cutting the X and Y Axes, the following points are obtained:

- Cut with the X Axis: the Hreq value is obtained, from x-y coordinates: X = HReq = 93.9%, Y = 0.

- Cut with the Y Axis: the *TEmax* value is obtained from x-y coordinates: X = 0, Y = = 302.48.

**Parameter estimates:**

The estimated *aws* value of the surface of the product being dried, corresponds to the *HReq* value of the air obtained in the previous step, expressed on a per unit basis:

$$HReq = 93.9\% \quad aws = \frac{93.9}{100} = 0.939$$

Interpretation: in this case it has been determined that the *aws* of the product being dried would have an approximate value of 0.939, since *TE* would decrease to zero when *HR* of the air of the dryer was at a *HR* of 93.9%, and both components, air and surface of the product being dried, would be in equilibrium without a net evaporation of one to another of the components. At that point of equilibrium, both values *aws* and HReq would match.
The TF value at each point of *HRr,* can be obtained by extrapolation on the Regression Line obtained.
The estimated value of the Maximum Evaporation Rate corresponds to the *TEmáx* value obtained in graph (700):

$$TEm\acute{a}x = 302{,}48$$

In this case the units of *TE* and *TEmáx* correspond to (*g/m3/h*), of increment per hour, of the g evaporates contained by m3 of air of the dryer. This allows a quantitative estimate of the current TE and *TEmáx.*
Interpretation: *TEmax* corresponds to the *TE* that would be achieved if *HR* of the air dryer were set to 0%. In this case, *TE* would be the maximum that can be reached (with the rest of the conditions unchanged) if completely dry air (*HR* = 0%) were used in the dryer. An abnormally low *TEmax* value, could be indicative that the Sausage Surface is very dry, and that even if the air in the Dryer were at 0% *HR,* the rate of evaporation of the product being dried would be very slow, and it would only be able to increase *HR* of the air of the Dryer very slowly (very low *TE*).
If, in addition, the producer of the product being dried, for example, salamis, introduces additional data of its process such as:

- the air volume of the dryer,
- the total mass of sausage placed in the dryer

- the composition of the sausage mass
- the total surface of the sausage

this would make it possible to make additional quantitative estimates of its process, such as total mass evaporated per hour, daily sausage weight loss, evaporation in kg / m2 / day, etc. in a simple way.

**Example 3**

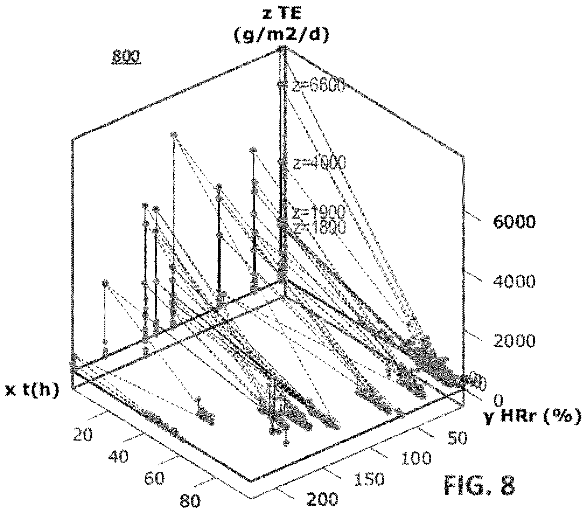

Figure 8 shows a 3D graph (800) of a set of regression lines of the data obtained by means of the method of the present invention. These regression lines generate the following partial traces:

On the *XY* plane, the cut-off points of *HReq,* indicate the trace of the evolution of *aws* with respect to time, which is similar to that which would be obtained by making direct specific measurements of the sausage in the different phases of the drying process. The product begins with a high level *aws,* close to *aw* of meat emulsion, and gradually decreases until it stabilizes at the end *aw* of the product being dried, for example a dried meat product.

On the *XZ* plane, the cut-off points of *T Emax,* draw the trace of the evolution of *T Emax* with respect to time, said trace is similar to the graph of the evolution of the drying rate with respect to time. *T Emax* is initially very high and is maintained while the internal contribution quickly contributes enough mass for its evaporation. From a certain point (analogous to the critical drying point), the maximum drying rate *T Emax* begins to decrease since the internal contribution is not capable of contributing enough mass to the surface to evaporate, until *TE* finally reaches very low values when the product is practically dry and in equilibrium with the storage atmosphere.

On the YZ plane, the regression lines obtained by the process of the invention are superimposed. It is observed that said regression lines gradually have a cut-off point with the Y-axis at lower values, as the product drying phases progress. The slope of the lines also changes, and it is generally observed that the slope is greater in the initial drying phases, and lower in the final phases in which the product is already very dried.

In *XYZ* space, the current drying points *HRr, TE, t* are distributed on bundles of lines, which change their inclination. It is possible that when there are a few sustained points at excessively high *TE* values (very strong evaporation), this fact is then reflected in a subsequent decrease in the values of *TEmαx* (symptom of the "crusting" defect).

The comparison of these regression lines of the graph (800) and their lateral traces on the planes, can allow the comparison with the example of a standard process. The appearance in the partial traces of points or segments that move away from the standard trace, may indicate that anomalous conditions are occurring that shall be reviewed in the process, such as the anomalous decrease of *T Emax* due to the appearance of crusting, or either low *T Emax* values related to other factors such as the use of DFD (dark firm dry) meats, high pHs of the meat emulsion, or for example related to poor fermentation that does not adequately lower the pH of the meat emulsion.

**Claims**

1. Method for estimating the surface water activity *aws* of a product being dried in a dryer comprising at least one relative humidity *HR* probe of the dryer atmosphere, the process comprises the following steps carried out by computational means:

   - obtaining by means of the at least one relative humidity *HR* probe a set of relative *HRi* humidity values of the dryer atmosphere at time points *ti* during the product drying process;
   - obtaining a set of $HR_{ri}(\%)$ representative values based on the relative humidity *HRi* values during the drying process of the product;
   - obtaining a set of evaporation rate values $TE_i$ based on the set of *HRi* and *ti* values;
   - obtaining the regression line of the function $F(\alpha,\beta) = F(HRri, TE_i)$, such that:

$$\alpha = HReq, \qquad \beta = 0$$

$$\beta = TEm\acute{a}x, \qquad \alpha = 0$$

   - wherein *HReq* is the relative humidity when the air and the surface of the product being dried are in equilibrium,
   - wherein *TEmáx* is the maximum evaporation rate when *HR* of the air of the dryer is zero, and
   - estimating the value of *aws* of the product being dried based on *HReq,* such that:

$$aws = \frac{HReq}{100}$$

2. Method for estimating the surface water activity *aws* of a product being dried in a dryer comprising at least a temperature probe and one relative humidity *HR* probe of the dryer atmosphere, the process comprises the following steps carried out by computational means:

> - obtaining by means of the probes a set of temperature T and relative *HRi* humidity values of the dryer atmosphere at time points *ti* during the product drying process;
> - obtaining from the set of values of temperature T and relative *HRi,* the set of values of absolute *Habs$_i$* humidity values of the dryer atmosphere at time points *ti* during the product drying process;
> - obtaining a set of *HR$_{ri}$*(%) representative values based on the relative humidity *HRi* values during the drying process of the product;
> - obtaining a set of evaporation rate values *TE$_i$* based on the set of *Habs$_i$* and *ti* values
> - obtaining the regression line of the function *F(α,β) = F(HRri, TE$_i$),* such that:

$$\alpha = HReq, \qquad \beta = 0$$

$$\beta = TEm\acute{a}x, \qquad \alpha = 0$$

> - wherein *HReq* is the relative humidity when the air and the surface of the product being dried are in equilibrium,
> - wherein *TEmáx* is the maximum evaporation rate when *HR* of the air of the dryer is zero, and
> - estimating the value of *aws* of the product being dried based on *HReq,* such that:

$$aws = \frac{HReq}{100}$$

3. The method according to claims 1 or 2, wherein the set of representative values of relative humidity *HR$_{ri}$*(%) corresponds to:

$$HR_{ri}(\%) = (HR_i + HR_{i+1})/2$$

4. The method according to claims 1 or 2, wherein the set of representative values of relative humidity *HR$_{ri}$*(%) corresponds to:

$$HR_{ri}(\%) = HR_i;$$

or

$$HR_{ri}(\%) = HR_{i+1}$$

5. The method according to claims 1 or 2, wherein the set of representative values of relative humidity *HR$_{ri}$*(%) corresponds to:

$$HR_{ri}(\%) = Me\,(HR_i + HR_{i+1}\,...HR_{i+N});$$

Wherein *Me* is the arithmetic mean of (N+1) data.

6. The method according to claims 1 or 2, wherein obtaining a set of evaporation rate values *TE* corresponds to:

$$TE_i = (HR_{i+1} - HR_i)/(t_{i+1} - t_i);$$

or

$$TE_i = (Habs_{i+1} - Habs_i)/(t_{i+1} - t_i).$$

7. Dryer for estimating the surface water activity *aws* of products being dried, wherein the dryer comprises at least one relative humidity *HR* probe of the dryer atmosphere, and **characterized in that** it comprises computational media configured for:

- obtaining by means of the at least one relative humidity *HR* probe a set of relative *HRi* humidity values of the dryer atmosphere at time points during the product drying process;
- obtaining a set of representative values $HR_{ri}$(%) based on the relative humidity *HRi* values during the product drying process
- obtaining a set of evaporation rate $TE_i$ values based on the set of *HRi* and *ti* values;
- obtaining the regression line of the function $F(\alpha, \beta) = F(HRri, TE_i)$, such that:

$$\alpha = HReq, \beta = 0$$

$$\beta = TEmáx, \alpha = 0$$

- wherein *HReq* is the relative humidity when the air and the surface of the product being dried are in equilibrium,
- wherein *TEmáx* is the maximum evaporation rate if *HR* of the dryer air were zero, and
- estimating the *aws* value of the product being dried based on *HReq,* such that:

$$aws = \frac{HReq}{100}$$

8. Dryer for estimating the surface water activity *aws* of products being dried, wherein the dryer comprises at least one relative humidity HR probe of the dryer atmosphere and a temperature probe, **characterized in that** it comprises computational media configured for:

- obtaining by means of the probes a set of temperature T and relative *HRi* humidity values of the dryer atmosphere at time points *ti* during the product drying process;
- obtaining from the set of values of temperature T and relative *HRi,* the set of values of absolute $Habs_i$ humidity values of the dryer atmosphere at time points *ti* during the product drying process;
- obtaining a set of $HR_{ri}$(%) representative values based on the relative humidity *HRi* values during the drying process of the product;
- obtaining a set of evaporation rate values $TE_i$ based on the set of $Habs_i$ and *ti* values;
- obtaining the regression line of the function $F(\alpha, \beta) = F(HRri, TE_i)$, such that:

$$\alpha = HReq, \qquad \beta = 0$$

$$\beta = TEmáx, \qquad \alpha = 0$$

- wherein *HReq* is the relative humidity when the air and the surface of the product being dried are in equilibrium,
- wherein *TEmáx* is the maximum evaporation rate when *HR* of the air of the dryer is zero, and
- estimating the value of *aws* of the product being dried based on *HReq,* such that:

$$aws = \frac{HReq}{100}$$

**Patentansprüche**

1. Verfahren zum Schätzen der Oberflächenwasseraktivität aws von einem Produkt, das in einem Trockner getrocknet wird, der mindestens eine Sonde für die relative Feuchte *HR* der Trockneratmosphäre umfasst, wobei das Verfahren die folgenden Schritte umfasst, die mit Hilfe von Berechnungsmitteln durchgeführt werden:

   - Erhalten eines Satzes von relativen *HRi*-Feuchtigkeitswerten der Trockneratmosphäre zu Zeitpunkten *ti* während des Trocknungsprozesses mit Hilfe der mindestens einen *HR*-Sonde für die relative Feuchtigkeit;
   - Erhalten eines Satzes von repräsentativen $HR_{ri}$(%)-Werten auf der Grundlage der Werte der relativen Feuchtigkeit *HRi* während des Trocknungsprozesses des Produkts;
   - Erhalten eines Satzes von Verdampfungsratenwerten $TE_i$ auf der Grundlage des Satzes von *HRi* und *ti*-Werten;
   - Erhalten der Regressionslinie der Funktion *F(α, β) = F(HR_{ri}, TE_i)*, so dass::

   $$\alpha = HReq, \qquad \beta = 0$$

   $$\beta = TEmáx, \qquad \alpha = 0$$

   - wobei *HReq* die relative Feuchtigkeit ist, wenn die Luft und die Oberfläche des trocknenden Produkts im Gleichgewicht sind,
   - wobei *TEmáx* die maximale Verdampfungsrate ist, wenn *HR* der Luft des Trockners Null ist, und
   - Schätzen des Wertes von *aws* des trocknenden Produkts auf der Grundlage von *HReq,* so dass:

   $$aws = \frac{HReq}{100}$$

2. Verfahren zum Schätzen der Oberflächenwasseraktivität *aws* von einem Produkt, das in einem Trockner getrocknet wird, der mindestens eine Sonde für die Temperatur und eine Sonde für die relative Feuchte HR der Trockneratmosphäre umfasst, wobei das Verfahren die folgenden Schritte umfasst, die mit Hilfe von Berechnungsmitteln durchgeführt werden:

   - Erhalten eines Satzes von Werten der Temperatur T und der relativen Feuchtigkeit *HRi* der Trockneratmosphäre zu Zeitpunkten *ti* während des Trocknungsprozesses des Produkts mit Hilfe der Sonden;
   - Erhalten aus dem Satz von Werten der Temperatur T und der relativen *HRi* den Satz von Werten der absoluten $Habs_i$-Feuchtigkeitswerte der Trockneratmosphäre zu Zeitpunkten *ti* während des Trocknungsprozesses des Produkts;
   - Erhalten eines Satzes von repräsentativen $HR_{ri}$(%)-Werten auf der Grundlage der Werte der relativen Feuchtigkeit *HRi* während des Trocknungsprozesses des Produkts;
   - Erhalten eines Satzes von Verdampfungsratenwerten $TE_i$ auf der Grundlage des Satzes von $Habs_i$ und *ti*-Werten
   - Erhalten der Regressionslinie der Funktion *F(α, β) = F(HRri, TEi),* so dass::

   $$\alpha = HReq, \qquad \beta = 0$$

   $$\beta = TEmáx, \qquad \alpha = 0$$

   - wobei *HReq* die relative Feuchtigkeit ist, wenn die Luft und die Oberfläche des zu trocknenden Produkts im Gleichgewicht sind,

- wobei *TEmáx* die maximale Verdampfungsrate ist, wenn *HR* der Luft des Trockners Null ist, und
- Schätzen des Wertes von aws des trocknenden Produkts auf der Grundlage von *HReq,* so dass:

$$aws = \frac{HReq}{100}$$

3. Verfahren nach Anspruch 1 oder 2, wobei die Menge der repräsentativen Werte der relativen Feuchtigkeit $HR_{ri}$(%) entspricht:

$$HR_{ri}(\%) = (HR_i + Hr_{i+1})/2$$

4. Verfahren nach Anspruch 1 oder 2, wobei die Menge der repräsentativen Werte der relativen Feuchtigkeit $HR_{ri}$(%) entspricht:

$$HR_{ri}(\%) = HR_{i;}$$

oder

$$HR_{ri}(\%) = HR_{i+1}$$

5. Verfahren nach Anspruch 1 oder 2, wobei die Menge der repräsentativen Werte der relativen Feuchtigkeit $HR_{ri}$(%) entspricht:

$$HR_{ri}(\%) = Me\ (HR_i + HR_{i+1} \dots HR_{i+N})\ ;$$

wobei *Me* das arithmetische Mittel von (N+1) Daten ist.

6. Verfahren nach Anspruch 1 oder 2, wobei Erhalten eines Satzes von Verdampfungsratenwerten *TE* entspricht:

$$-\ TE_i = (HR_{i+1} - HR_i)/(t_{i+1} - t_i)\ ;$$

oder

$$-\ TE_i = (Habs_{i+1} - Habs_i)/(t_{i+1} - t_i).$$

7. Trockner zum Schätzen der Oberflächenwasseraktivität *aws* von Produkten, die getrocknet werden, wobei der Trockner mindestens eine Sonde für die relative Feuchte *HR* der Trockneratmosphäre umfasst, **dadurch gekennzeichnet, dass** er Berechnungsmitteln umfasst, die konfiguriert sind zum:

- Erhalten eines Satzes von relativen *HRi*-Feuchtigkeitswerten der Trockneratmosphäre zu Zeitpunkten *ti* während des Trocknungsprozesses mit Hilfe der mindestens einen *HR*-Sonde für die relative Feuchtigkeit;
- Erhalten eines Satzes von repräsentativen $HR_{ri}$(%)-Werten auf der Grundlage der Werte der relativen Feuchtigkeit *HRi* während des Trocknungsprozesses des Produkts;
- Erhalten eines Satzes von Verdampfungsratenwerten $TE_i$ auf der Grundlage des Satzes von *HRi* und *ti*-Werten;
- Erhalten der Regressionslinie der Funktion *F(α, β) = F(HRri, TEi),* so dass::

$$\alpha = HReq, \qquad \beta = 0$$

$$\beta = TEmáx, \qquad \alpha = 0$$

- wobei *HReq* die relative Feuchtigkeit ist, wenn die Luft und die Oberfläche des zu trocknenden Produkts im Gleichgewicht sind,
- wobei *TEmáx* die maximale Verdampfungsrate ist, wenn *HR* der Luft des Trockners Null ist, und
- Schätzen des Wertes von *aws* des trocknenden Produkts auf der Grundlage von *HReq,* so dass:

$$aws = \frac{HReq}{100}$$

**8.** Trockner zum Schätzen der Oberflächenwasseraktivität *aws* von Produkten, die getrocknet werden, wobei der Trockner mindestens eine Sonde für die relative Feuchte *HR* der Trockneratmosphäre und eine Sonde für die Temperatur umfasst, **dadurch gekennzeichnet, dass** er Berechnungsmitteln umfasst, die konfiguriert sind zum:

- Erhalten eines Satzes von Werten der Temperatur T und der relativen Feuchtigkeit *HRi* der Trockneratmosphäre zu Zeitpunkten *ti* während des Trocknungsprozesses des Produkts mit Hilfe der Sonden;
- Erhalten aus dem Satz von Werten der Temperatur T und der relativen *HRi* den Satz von Werten der absoluten $Habs_i$-Feuchtigkeitswerte der Trockneratmosphäre zu Zeitpunkten *ti* während des Trocknungsprozesses des Produkts;
- Erhalten eines Satzes von repräsentativen $HR_{ri}$(%)-Werten auf der Grundlage der Werte der relativen Feuchtigkeit *HRi* während des Trocknungsprozesses des Produkts;
- Erhalten eines Satzes von Verdampfungsratenwerten $TE_i$ auf der Grundlage des Satzes von $Habs_i$ und *ti*-Werten
- Erhalten der Regressionslinie der Funktion *F(α, β) = F(HRri, TEi),* so dass::

$$α = HReq, \qquad β = 0$$

$$β = TEmáx, \qquad α = 0$$

- wobei *HReq* die relative Feuchtigkeit ist, wenn die Luft und die Oberfläche des zu trocknenden Produkts im Gleichgewicht sind,
- wobei *TEmáx* die maximale Verdampfungsrate ist, wenn *HR* der Luft des Trockners Null ist, und
- Schätzen des Wertes von *aws* des trocknenden Produkts auf der Grundlage von *HReq,* so dass:

$$aws = \frac{HReq}{100}$$

**Revendications**

**1.** Procédé d'estimation de l'activité de l'eau de surface *aws* d'un produit en cours de séchage dans un séchoir comprenant

au moins une sonde d'humidité relative *HR* de l'atmosphère du séchoir,
le procédé comprend les étapes suivantes, mises en oeuvre par des moyens informatiques :

- obtenir, au moyen d'au moins une sonde d'humidité relative *HR*, un ensemble de valeurs d'humidité relative *HRi* de l'atmosphère du séchoir aux points de temps *ti* pendant le processus de séchage ;
- obtenir un ensemble de valeurs représentatives de *HRri* (%) en fonction de l'humidité relative *HRi* pendant le processus de séchage du produit ;
- obtenir un ensemble de valeurs de taux d'évaporation *TEi* sur la base de l'ensemble de valeurs *HRi* et *ti ;*
- obtenir la droite de régression de la fonction F(α, β) = *F(HRri, TEi),* telle que :

$$α = HReq, \qquad β = 0$$

$$\beta = TEmax, \quad \alpha = 0$$

- dans lequel *HReq est l*'humidité relative lorsque l'air et la surface du produit en cours de séchage sont en équilibre,
- dans lequel *TEmax* est le taux d'évaporation maximal lorsque *HR* de l'air du séchoir est égal à zéro, et
- l'estimation de la valeur de l'*aws* du produit en cours de séchage sur la base de *HReq, de* telle sorte que :

$$aws = \frac{HReq}{100}$$

**2.** Procédé d'estimation de l'activité de l'eau de surface *aws* d'un produit en cours de séchage dans un séchoir comprenant

au moins une sonde de température et une sonde d'humidité relative *HR* de l'atmosphère du séchoir, le procédé comprend les étapes suivantes mises en oeuvre par des moyens informatiques :

- l'obtention, au moyen des sondes, d'un ensemble de valeurs de température T et d'humidité relative *HRi* de l'atmosphère du séchoir aux points *ti* pendant le processus de séchage du produit ;
- obtenir, à partir de l'ensemble des valeurs de la température T et de la valeur relative *HRi,* l'ensemble des valeurs de l'humidité absolue *Habs$_i$* de l'atmosphère du séchoir à des points de temps *ti* pendant le processus de séchage du produit ;
- obtenir un ensemble de valeurs représentatives de *HR$_{ri}$* (%) en fonction des valeurs de l'humidité relative *HRi* pendant le processus de séchage du produit ;
- obtenir un ensemble de valeurs de taux d'évaporation *TE$_i$* sur la base de l'ensemble de *Habs$_i$* et *ti* valeurs
- obtenir la droite de régression de la fonction F($\alpha$, $\beta$) = F(HRri, TE$_i$), telle que :

$$\alpha = HReq, \quad \beta = 0$$

$$\beta = TEmax, \quad \alpha = 0$$

- dans lequel *HReq est l*'humidité relative lorsque l'air et la surface du produit en cours de séchage sont en équilibre,
- dans lequel *TEmax* est le taux d'évaporation maximal lorsque *HR* de l'air du séchoir est égal à zéro, et
- l'estimation de la valeur de l'aws du produit en cours de séchage sur la base de *HReq, de* telle sorte que :

$$aws = \frac{HReq}{100}$$

**3.** Le procédé selon les revendications 1 ou 2, dans lequel l'ensemble des valeurs représentatives de l'humidité relative *HR$_{ri}$* (%) correspond à :

$$HR_{ri}(\%) = (HR_i + HR_{i+1})/2$$

**4.** Le procédé selon les revendications 1 ou 2, dans lequel l'ensemble des valeurs représentatives d'humidité relative *HR$_{ri}$* (%) correspond à :

$$HR_{ri}(\%) = HR_i$$

ou

$$HR_{ri}(\%) = HR_{i+1}$$

**5.** Le procédé selon les revendications 1 ou 2, dans lequel l'ensemble des valeurs représentatives d'humidité relative *HRri* (%) correspond à :

$$HR_{ri}(\%) = Me\ (HR_i + HR_{i+1} \dots HR_{i+N});$$

*dans lequel Me* est la moyenne arithmétique de (N+1) données.

**6.** Le procédé selon les revendications 1 ou 2, dans lequel l'obtention d'un ensemble de valeurs de taux d'évaporation TE correspond á :

$$- \quad TE_i\ =\ (HR_{i+1} - HR_i)/(t_{i+1} - t_i);$$

ou

$$- \quad TE_i\ =\ (Habs_{i+1} - Habs_i)/(t_{i+1} - t_i).$$

**7.** Séchoir pour estimer l'activité de l'eau de surface *aws* des produits en cours de séchage,
dans lequel le séchoir comprend au moins une sonde d'humidité relative HR de l'atmosphère du séchoir, et **caractérisé en ce qu'**il comprend un support de calcul configuré pour :

- obtenir, au moyen d'au moins une sonde d'humidité relative *HR*, un ensemble de données d'humidité relative du séchoir à certains moments du processus de séchage du produit ;
- obtenir un ensemble de valeurs représentatives $HR_{ri}$(%) sur la base de l'humidité relative *HRi* pendant le processus de séchage du produit ;
- obtenir un ensemble de valeurs de taux d'évaporation $TE_i$ sur la base de l'ensemble de valeurs *HRi* et *ti* ;
- obtenir la droite de régression de la fonction *F(α, β) = F(HRri, TE$_i$)*, telle que

$$\alpha = HReq, \qquad \beta = 0$$

$$\beta = TEmax, \qquad \alpha = 0$$

- dans lequel *HReq* est l'humidité relative lorsque l'air et la surface du produit en cours de séchage sont en équilibre,
- où *TEmax* est le taux d'évaporation maximal si *la HR* de l'air du sécheur est nulle, et
- l'estimation de la valeur *aws* du produit en cours de séchage sur la base de *HReq, de* telle sorte que :

$$aws = \frac{HReq}{100}$$

**8.** Séchoir permettant d'estimer l'activité de l'eau de surface *aws* des produits en cours de séchage,
dans lequel le séchoir comprend au moins une sonde d'humidité relative *HR* de l'atmosphère du séchoir et une sonde de température, **caractérisée en ce qu'**elle comprend des moyens informatiques configurés pour :

- l'obtention, au moyen des sondes, d'un ensemble de valeurs de température T et d'humidité relative *HRi* de l'atmosphère du séchoir aux points *ti* pendant le processus de séchage du produit ;
- obtenir, à partir de l'ensemble des valeurs de la température T et de la valeur relative *HRi,* l'ensemble des valeurs de l'humidité absolue *Habs$_i$* de l'atmosphère du séchoir aux points de temps *ti* pendant le processus de séchage du produit ;
- obtenir un ensemble de valeurs représentatives de $HR_{ri}$ (%) en fonction des valeurs de l'humidité relative *HRi* pendant le processus de séchage du produit ;
- obtenir un ensemble de valeurs de taux d'évaporation *TEi* sur la base de l'ensemble de valeurs de *Habs$_i$* et *ti* ;
- obtenir la droite de régression de la fonction *F(α, β) = F(HRri, TE$_i$),* telle que :

$$\alpha = HReq, \qquad \beta = 0$$

$$\beta = TEmax, \qquad \alpha = 0$$

- dans laquelle *HReq* est l'humidité relative lorsque l'air et la surface du produit en cours de séchage sont en équilibre,
- dans lequel *TEmax* est le taux d'évaporation maximal lorsque *HR* de l'air du séchoir est égal à zéro, et
- l'estimation de la valeur de l'aws du produit en cours de séchage sur la base de *HReq, de* telle sorte que :

$$aws = \frac{HReq}{100}$$

100      Period 4: 86-90 % 16-18°C

FIG. 1

**FIG. 2**

FIG. 3

EP 4 322 752 B1

**400**

**FIG. 4**

FIG. 5

EP 4 322 752 B1

600

**FIG. 6**

EP 4 322 752 B1

**700**

$y = -3,209x + 302,48$

**FIG. 7**

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020153774 A